# EUROPÄISCHE PATENTSCHRIFT

(11) **EP 1 792 786 B1**
(45) Veröffentlichungstag und Bekanntmachung des Hinweises auf die Patenterteilung: **03.03.2010**
(21) Anmeldenummer: 06021797.3
(22) Anmeldetag: 18.10.2006
(51) Int. Cl.: B60R 19/34

(54) **Crashbox**
Crash box
Boitier absorbeur d'énergie

(30) Priorität: 30.11.2005 DE 102005057429
(43) Veröffentlichungstag der Anmeldung: 06.06.2007
(73) Patentinhaber: Benteler Automobiltechnik GmbH, 33102 Paderborn (DE)
(72) Erfinder: Härtel, Wulf, Dr., 33549 Bad Oeynhausen (DE)
(74) Vertreter: Ksoll, Peter

(56) Entgegenhaltungen:
- EP-A- 1 762 438
- WO-A-02/04253
- WO-A-03/066383
- DE-A1- 10 256 000
- DE-A1- 19 635 285
- DE-A1- 19 751 513
- US-A1- 2005 099 027
- US-A1- 2005 104 392

## Beschreibung

Die Erfindung betrifft eine Crashbox zur Eingliederung zwischen dem Stoßfängerquerträger und einem Fahrzeuglängsträger eines Kraftfahrzeugs.

Crashboxen kommen als Energieabsorber zum Einsatz. Sie sollen die aus einem Anprall resultierende Energie absorbieren, indem diese in Verformungsarbeit umgewandelt wird und auf diese Weise dazu beitragen, dass die Fahrzeugstruktur bei einem Anprall mit geringerer Geschwindigkeit keine oder nur geringe Beschädigungen davonträgt.

Die Crashboxen der gattungsgemäßen Bauart weisen ein gehäuseartiges Deformationsprofil aus Metallblech auf, an welches längsträgerseitig eine Flanschplatte gefügt ist. Bei der in der Praxis bewährten Crashbox gemäß der EP 1 207 085 B1 ist das Deformationsprofil aus einer Oberschale und einer Unterschale gebildet. Die Schalen sind U-förmig profiliert und ineinander gefügt. Diese Bauart zeichnet sich durch eine hohe Quersteifigkeit aus.

Eine Crashbox mit einem Deformationsprofil in Schalenbauweise geht weiterhin aus der DE 100 14 469 A1 hervor. Durch Sicken im Deformationsprofil soll ein gezieltes Verformen an einem bestimmten Punkt eingeleitet werden.

Längsträgerseitig ist an den Crashboxen der in Rede stehenden Bauart eine Flanschplatte gefügt. Bei der Fertigung der Crashbox werden das Deformationsprofil und die Flanschplatte separat gefertigt. Hierzu werden die Halbschalen durch Schweißpunkte zum Deformationsprofil aneinander geheftet und danach das Deformationsprofil und die Flanschplatte mittels Schweißnähten verbunden. Üblicherweise geschieht dies durch Metallaktivgasschweißen (MAG). Bei der Fertigung wird folglich ein Punktgas- und ein Schutzgasschweißprozess durchgeführt. Dieser Fertigungsprozess ist vergleichsweise aufwendig.

Die DE 196 35 285 A1 offenbart eine Crashbox zur Eingliederung zwischen dem Stoßfängerquerträger und einem Fahrzeuglängsträger eines Kraftfahrzeugs, welche ein gehäuseartiges Deformationsprofil aufweist. Das Deformationsprofil besteht aus zwei Halbschalen aus Metallblech mit umgebogenen Längs- und Endkanten und einer längsträgerseitigen Flanschplatte.

Durch die US 2005/0104392 A1 zählt ein Querträger für Stoßfängersysteme zum Stand der Technik mit Crashboxen, die Aufprallenergie verzehren sollen, wenn sie in ihrer Längsrichtung gestaucht werden.

Auch die US 2005/0099027 A1 offenbart eine Crashbox in Schalenbauweise bestehend aus halbrunden Schalen, die entlang ihrer Längskanten gefügt sind.

Die aus der DE 102 56 000 A1 bekannte Crashbox besitzt ein gehäuseartiges Deformationsprofil in Form eines Blechkastens, der durch Falten eines ebenen Blechs gebildet ist. Im Bereich der Körperkanten des Deformntionsprofils sind Durchbrechungen vorgesehen, um das Faltverhalten der Crashbox zu beeinflussen.

Aus der DE 197 51 513 A1 geht ein Verfahren zur Herstellung einer Crashbox sowie eine Crashbox hervor. Die Crashbox besteht aus einem hohler rohrförmigen Crashkörper mit seitlichen Befestigungsflanschen an einem Ende und Befestigungswänden am anderen Ende. Die Crashbox ist einstückig als Faltkonstruktion aus Metallblech gefertigt.

Der Erfindung liegt daher ausgehend vom Stand der Technik die Aufgabe zugrunde, eine fertigungstechnisch und kostenmäßig verbesserte Crashbox zu schaffen.

Die Lösung dieser Aufgabe besteht nach der Erfindung in einer Crashbox gemäß den Merkmalen von Anspruch 1.

Kernpunkt der Erfindung ist, dass die Flanschplatten beider Schalenbauteile zumindest bereichsweise eine doppellagige Flanschplatte bilden.

Die Crashbox, bestehend aus Deformationsprofil und Flanschplatte, ist als Faltkonstruktion ausgebildet, wobei die Flanschplatte ohne zusätzliche Fügeoperation direkt aus der Ausgangsplatine herausgeformt ist. Die Crashbox, bestehend aus Deformationsprofil und Flanschplatte, ist als Faltkonstruktion aus Metallblech gebildet. Hierbei sind unterschiedlichste Geometrien möglich. Auch Materialdopplungen können vorgenommen werden, um so die Festigkeit in bestimmten Bereichen zu erhöhen. Des Weiteren kann das Deformationsprofil unterschiedliche Materialstärken aufweisen. Hierzu wird die Ausgangsplatine vorab entsprechend abgestreckt oder abgewalzt. Die Faltkonstruktion wird nach der Herstellung verschweißt. Dies kann vorzugsweise mittels Widerstandspunktverschweißen erfolgen. Ein aufwendiges MAG-Schweißen entfällt. Insgesamt lässt die erfindungsgemäß vorgeschlagene Crashbox eine respektable Kostenersparnis erwarten.

Das Deformationsprofil der Crashbox ist aus zwei Schalenbauteilen gebildet, wobei jedes Schalenbauteil einen Deformationsprofilabschnitt mit einem einstückig angegliederten Flanschplattenabschnitt beinhaltet. Zur Fertigung kommen zwei Ausgangsplatinen aus Metallblech zum Einsatz. Jede Ausgangsplatine wird zu einem Schalenbauteil mit einem Deformationsprofilabschnitt und einem quer zur Längserstreckung des Deformationsprofilabschnitts ausgerichteten Flanschplattenabschnitt gefaltet. Diese Schalenbauteile werden anschließend nur noch mittels Widerstandspunktschweißen zusammengeheftet.

Die Crashbox ist bereichsweise doppellagig ausgestaltet. Hierbei bilden die Flanschplattenabschnitte beider Schalenbauteile zumindest bereichsweise eine doppellagige Flanschplatte, wobei die doppellagige Flanschplatte durch Überlappung der Flanschplattenabschnitte beider Schalenbauteile realisiert ist. Die Flanschplatte ist bereichsweise, insbesondere in den außen liegenden Bereichen benachbart zum Deformationsprofil, doppellagig gestaltet.

Vorteilhafte Ausgestaltungen des grundsätzlichen Erfindungsgedankens sind Gegenstand der abhängigen Ansprüche 2 bis 6.

Wie bereits erwähnt, kann die Crashbox bereichsweise doppellagig ausgestaltet sein. Insbesondere ist die Flanschplatte zumindest bereichsweise doppellagig gestaltet, vorzugsweise in den außen liegenden Bereichen benachbart zum Deformationsprofil.

Die Flanschplatte kann das Deformationsprofil längsträgerseitig verschließen, wodurch die Quersteifigkeit erhöht wird. Grundsätzlich kann das Deformationsprofil aber längsträgerseitig offen sein, um Bauteile durch die Crashbox hindurchführen zu können, beispielsweise eine Abschlepphakenanbindung.

In einer weiteren Ausgestaltung kann das Deformationsprofil eine Sollknickstelle aufweisen. Diese dient als Initiator zur Einleitung einer kontrollierten Deformation bei Überschreiten einer bestimmten Belastung.

Zur Einstellung eines bestimmten Festigkeits- und Deformationsverhaltens kann das Deformationsprofil auch zumindest einen Bereich mit einer gegenüber den anderen Bereichen des Deformationsprofils höheren Härte aufweisen. Der Bereich höherer Härte ist vorzugsweise partiell vergütet. Die partielle Vergütung kann bereits vor der Fertigung des Deformationsprofils an der oder den Ausgangsplatinen vorgenommen werden. Auch eine nachträgliche partielle Vergütung des Deformationsprofils ist möglich.

Des Weiteren kann die Wanddicke des Deformationsprofils variieren, um auch auf diese Weise ein bestimmtes Deformationsverhalten zu erreichen.

Die Erfindung ist nachfolgend anhand von Zeichnungen beschrieben. Es zeigen:
- Figur 1: den Zuschnitt einer ersten Ausgangsplatine in der Draufsicht;
- Figur 2: den Zuschnitt einer zweiten Ausgangsplatine;
- Figur 3: in perspektivischer Ansicht ein aus der Ausgangsplatine gemäß der Figur 1 gebildetes Schalenbauteil;
- Figur 4: das aus der Ausgangsplatine gemäß der Figur 2 gefaltete Schalenbauteil und
- Figur 5: ebenfalls in perspektivischer Darstellungsweise eine erfindungsgemäße Crashbox.

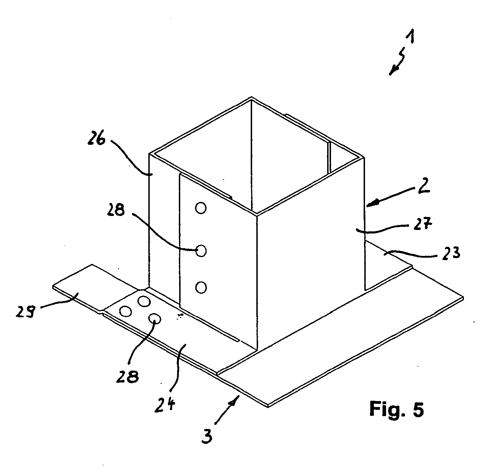

Figur 5 zeigt eine erfindungsgemäße Crashbox 1. Die Crashbox 1 kommt als Energie absorbierendes Deformationselement im Stoßfänger eines Kraftfahrzeugs zum Einsatz. Hierzu wird die Crashbox 1 zwischen dem Stoßfängerquerträger und einem Fahrzeuglängsträger eingegliedert.

Die Crashbox 1 weist ein gehäuseartiges Deformationsprofil 2 mit einer längsträgerseitigen Flanschplatte 3 auf. Das Deformationsprofil 2 und die Flanschplatte 3 sind als Faltkonstruktion aus Metallblech gebildet.

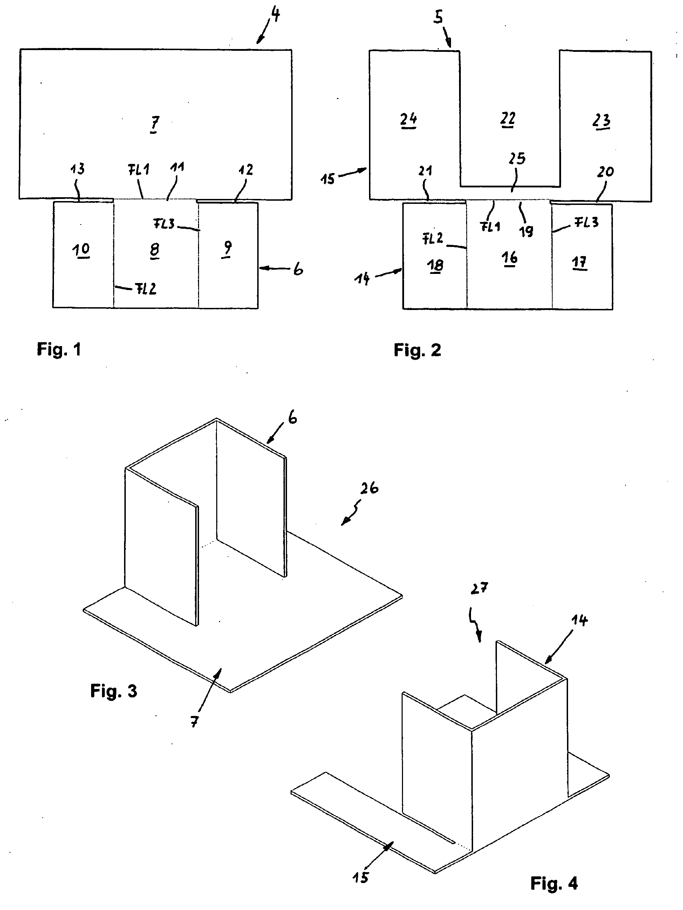

Zur Herstellung der Crashbox 1 kommen zwei ebene Ausgangsplatinen 4, 5 aus Metallblech zum Einsatz, deren Zuschnitt in den Figuren 1 und 2 zu erkennen ist.

Die Ausgangsplatinen 4 weist einen Deformationsprofilabschnitt 6 und einen Flanschplattenabschnitt 7 auf. Man erkennt, dass der Flanschplattenabschnitt 7 länger und breiter als der Deformationsprofilabschnitt 6 ausgeführt ist. Der Deformationsprofilabschnitt 6 besitzt einen zentralen Mittelabschnitt 8, an den sich jeweils seitlich zwei Flügelabschnitte 9, 10 angliedern. Der Deformationsprofilabschnitt 6 und der Flanschplattenabschnitt 7 sind über einen Steg 11 zwischen dem Mittelabschnitt 8 und dem Flanschplattenabschnitt 7 verbunden. Zwischen den Flügelabschnitten 9, 10 und dem Flanschplattenabschnitt 7 sind Schlitze 12, 13 vorgesehen.

Auch die Ausgangsplatine 5 weist einen Deformationsprofilabschnitt 14 und einen Flanschplattenabschnitt 15 auf. Der Deformationsprofilabschnitt 14 besitzt wie zuvor beschrieben einen Mittelabschnitt 16 mit zwei seitlichen Flügelabschnitten 17, 18. Der Deformationsprofilabschnitt 14 und der Flanschplattenabschnitt 15 sind über einen Steg 19 zwischen Mittelabschnitt 16 und Flanschplattenabschnitt 15 verbunden. Zwischen den Flügelabschnitten 17, 18 und dem Flanschplattenabschnitt 15 sind wiederum Schlitze 20, 21 vorgesehen.

Von seinen äußeren Abmessungen entspricht der Flanschplattenabschnitt 15 dem Flanschplattenabschnitt 7. Der Flanschplattenabschnitt 15 der Ausgangsplatine 5 weist jedoch im Gegensatz zum Flanschplattenabschnitt 7 eine großflächige rechteckige Ausnehmung 22 im mittleren Bereich und zwei Seitenabschnitte 23, 24 auf. Die Seitenabschnitte 23, 24 sind über einen Koppelabschnitt 25, welcher sich parallel zum Steg 19 erstreckt, verbunden.

Die Ausgangsplatine 4 und die Ausgangsplatine 5 werden jeweils zu einem Schalenbauteil 26 bzw. 27, wie in den Figuren 3 und 4 dargestellt, gefaltet. Die Faltlinien FL sind in den Figuren 1 und 2 gepunktet dargestellt. Die Deformationsprofilabschnitte 6 bzw. 14 werden jeweils an der Faltlinie FL1 parallel zum Steg 11 bzw. 19 aus der Bildebene nach oben umgestellt. Die Flügelabschnitte 9, 10 bzw. 17, 18 werden entlang der Faltlinien FL2 und FL3 umgefaltet, so dass man die Schalenbauteile 26, 27 mit einstückig angegliederten Flanschplattenabschnitten 7 bzw. 15 erhält.

Das Ausstanzen und Umfalten der Ausgangsplatinen 4, 5 kann einzügig in einem Pressenwerkzeug, aber auch in mehreren Pressenhüben erfolgen.

Die Schalenbauteile 26, 27 werden dann zur Crashbox 1 zusammengefügt. Hierzu werden die Schalenbauteile 26, 27 in- bzw. aufeinander gesetzt und mittels Widerstandsschweißpunkten 28 an den sich überlappenden Bereichen zusammengefügt. Hierdurch werden die Deformationsprofilabschnitte 6, 7 und 14, 15 zum Deformationsprofil 2 sowie die Flanschplattenabschnitte 7 und 15 zur Flanschplatte 3 komplettiert. Man erkennt, dass die Flanschplatte 3 benachbart zum Deformationsprofil 2 doppellagig ist. Längsträgerseitig ist das Deformationsprofil 2 durch die Flanschplatte 3 verschlossen. Die überstehenden Endabschnitte 29 der Seitenabschnitte 23, 24 sind in Bildebene nach unten umgeformt, so dass die Flanschplatte 3 längsträgerseitig eben ist.

Die Materialdopplung der Flanschplatte 3 auf der Außenseite benachbart zum Deformationsprofil 2 gibt der Crashbox 1 eine höhere Festigkeit in diesen Bereichen und führt zu einer insgesamt höheren Quersteifigkeit. Auch das Deformationsprofil 2 kann zur Einstellung der gewünschten Festigkeitseigenschaften doppel- oder mehrlagig gefaltet sein. Eine Festigkeitseinstellung der Crashbox 1 bzw. des Deformationsprofils 2 kann auch durch unterschiedliche Materialstärken, eine partielle Vergütung oder dem Vorsehen von Sicken bzw. Sollknickstellen realisiert werden.

### Bezugszeichen:

1 - Crashbox
2 - Deformationsprofil
3 - Flanschplatte
4 - Ausgangsplatine
5 - Ausgangsplatine
6 - Deformationsprofilabschnitt
7 - Flanschplattenabschnitt
8 - Mittelabschnitt
9 - Flügelabschnitt
10 - Flügelabschnitt
11 - Steg
12 - Schlitz
13 - Schlitz
14 - Deformationsprofilabschnitt
15 - Flanschplattenabschnitt
16 - Mittelabschnitt
17 - Flügelabschnitt
18 - Flügelabschnitt
19 - Steg
20 - Schlitz
21 - Schlitz
22 - Ausnehmung
23 - Seitenabschnitt
24 - Seitenabschnitt
25 - Koppelabschnitt
26 - Schalenbauteil
27 - Schalenbauteil
28 - Widerstandsschweißpunkt
29 - Endabschnitt

- FL1: -Faltlinie
- FL2: -Faltlinie
- FL3: -Faltlinie

## Patentansprüche

1. Crashbox zur Eingliederung zwischen dem Stoßfängerquerträger und einem Fahrzeuglängsträger eines Kraftfahrzeugs, welche ein gehäuseartiges Deformationsprofil (2) aus zwei Schalenbauteilen (26, 27) aufweist, die aus einer Faltkonstruktion aus Metallblech gebildet sind, wobei an jedem Schalenbauteil (26, 27) ein längsträgerseitiger Flanschplattenabschnitt (7, 15) angeformt ist, der als Bestandteil der Faltkonstruktion ausgebildet ist, **dadurch gekennzeichnet, dass** die längsträgerseitigen Flanschplattenabschnitte (7, 15) beider Schalenbauteile (26, 27) zumindest bereichsweise eine doppellagige Flanschplatte (3) bilden, wobei die doppellagige Flanschplatte (3) durch Überlappung der längsträgerseitgen Flanschplattenabschnitte (7, 15) der beiden Schalenbauteile (26, 27) realisiert ist.

2. Crashbox nach Anspruch 1, **dadurch gekennzeichnet, dass** die Flanschplatte (3) das Deformationsprofil (2) längsträgerseitig verschließt.

3. Crashbox nach Anspruch 1 oder 2, **dadurch gekennzeichnet, dass** das Deformationsprofil eine Sollknickstelle aufweist.

4. Crashbox nach einem der Ansprüche 1 bis 3, **dadurch gekennzeichnet, dass** das Deformationsprofil zumindest einen Bereich mit einer gegenüber den anderen Bereichen des Deformationsprofils höheren Härte aufweist.

5. Crashbox nach Anspruch 4, **dadurch gekennzeichnet, dass** der Bereich höherer Härte partiell vergütet ist.

6. Crashbox nach einem der Ansprüche 1 bis 5, **dadurch gekennzeichnet, dass** die Wanddicke des Deformationsprofils variiert.

## Claims

1. Crashbox for incorporation between the bumper cross-member and a side member of a motor vehicle which has a housing-like deformable profile (2) consisting of two shell components (26, 27), which are formed from a fold construction of sheet metal, wherein a flange plate section (7, 15) on the side of the side member is moulded onto each shell component (26, 27), said flange plate section being an integral part of the fold construction, **characterised in that** the flange plate sections (7, 15) of both shell components (26, 27) on the side of the side member at least partially form a double-layered flange plate (3), the double-layered flange plate (3) being realised by an overlapping of the flange plate sections (7, 15) on the side of the side member of both shell components (26, 27).

2. Crashbox according to claim 1, **characterised in that** the flange plate (3) closes off the deformable profile (2) at the side member side.

3. Crashbox according to claim 1 or 2, **characterised in that** the deformable profile has a predetermined folding point.

4. Crashbox according to one of claims 1 to 3, **characterised in that** the deformable profile has at least one area of greater hardness compared to the other areas of the deformable profile.

5. Crashbox according to claim 4, **characterised in that** the area of greater hardness is partially annealed.

6. Crashbox according to one of claims 1 to 5, **characterised in that** the wall thickness of the deformable profile varies.

## Revendications

1. Boîtier absorbeur d'énergie dit "crashbox" à intégrer entre la traverse de pare-chocs et un longeron d'un véhicule, qui comprend un profilé de déformation (2) semblable à un boîtier, à partir de deux composants en forme de coque (26, 27) qui sont formés à partir d'une construction pliée en tôle métallique, dans laquelle sur chaque composant en forme de coque (26, 27) est conformé un tronçon de plaque à bride (7, 15) du côté longeron, lequel est réalisé à titre de composant de la construction pliée, **caractérisée en ce que** les tronçons de plaque à bride (7, 15) du côté longeron des deux composants en forme de coque (26, 27) forment au moins localement une plaque à bride à deux couches (3), la plaque à bride à deux couches (3) étant réalisée par recouvrement des tronçons de plaque à bride (7, 15) du côté longeron des deux composants en forme de coque (26, 27).

2. Crashbox selon la revendication 1, **caractérisée en ce que** la plaque à bride (3) referme le profilé de déformation (2) du côté longeron.

3. Crashbox selon la revendication 1 ou 2, **caractérisée en ce que** le profilé de déformation comporte un emplacement de pliage de consigne.

4. Crashbox selon l'une des revendications 1 à 3, **caractérisée en ce que** le profilé de déformation comporte au moins une région avec une dureté plus élevée par rapport aux autres régions du profilé de déformation.

5. Crashbox selon la revendication 4, **caractérisée en ce que** la région à dureté plus élevée est partiellement traitée.

6. Crashbox selon l'une des revendications 1 à 5, **caractérisée en ce que** l'épaisseur de paroi du profilé de déformation varie.
